(19) Europäisches Patentamt
European Patent Office
Office européen des brevets

(11) Veröffentlichungsnummer: **0 347 780 B1**

# (12) EUROPÄISCHE PATENTSCHRIFT

(45) Veröffentlichungstag der Patentschrift: **18.08.93**

(51) Int. Cl.[5]: **C08G 77/00**, C08K 5/5393

(21) Anmeldenummer: **89111026.4**

(22) Anmeldetag: **19.06.89**

## (54) Polyamid-Formmassen mit verbesserter Transluzenz.

(30) Priorität: **24.06.88 DE 3821325**

(43) Veröffentlichungstag der Anmeldung:
**27.12.89 Patentblatt 89/52**

(45) Bekanntmachung des Hinweises auf die Patenterteilung:
**18.08.93 Patentblatt 93/33**

(84) Benannte Vertragsstaaten:
**AT BE CH DE FR GB IT LI NL**

(56) Entgegenhaltungen:
**EP-A- 0 097 937**
**JP-A-63 105 057**
**US-A- 3 954 847**
**US-A- 4 075 163**
**US-A- 4 077 940**

**PATENT ABSTRACTS OF JAPAN Band 10, Nr.239(C-367)(2295), 19.08.1986; &JP-A-6173764**

(73) Patentinhaber: **BASF Aktiengesellschaft**
**Carl-Bosch-Strasse 38**
**D-67063 Ludwigshafen(DE)**

(72) Erfinder: **Plachetta, Christoph, Dr.**
**Albert-Einstein-Allee 12**
**D-6703 Limburgerhof(DE)**
Erfinder: **Betz, Walter, Dr.**
**Weimarer Strasse 45**
**D-6700 Ludwigshafen(DE)**
Erfinder: **Weiss, Hans-Peter, Dr.**
**Pfalzring 75**
**D-6704 Mutterstadt(DE)**

EP 0 347 780 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Polyamid-Formmassen mit verbesserter Transluzenz, bestehend aus

A) 80 bis 99,95 Gew.% eines thermoplastischen Polyamids, wobei aromatische Polyamide ausgeschlossen sind,

B) 0,05 bis 1,0 Gew.% einer Phosphorverbindung der Struktur

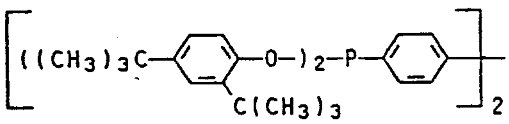

sowie darüber hinaus

C) 0 bis 19,95 Gew.% von B) verschiedener Zusatzstoffe und Verarbeitungshilfsmittel.

Polyamide sind eine Klasse von technischen Werkstoffen, die in vielen Bereichen Anwendung finden, da sie ein insgesamt interessantes Eigenschaftsspektrum aufweisen.

In einer Vielzahl von Patentanmeldungen werden Polyamid-Formmassen beschrieben, die für bestimmte Anwendungen gezielt modifiziert wurden. Nur beispielhaft seien hier die DE-A 26 22 973 (schlagzäh modifizierte Polyamide), die DE-A 19 31 387 (flammfest ausgerüstete Polyamide) und die EP-A 58 331 (schlagzäh modifizierte weichmacherhaltige Polyamide) genannt.

Auch der Zusatz von phosphorhaltigen Verbindungen zur Verbesserung der Wärmestabilität von Polyamiden ist bekannt und z.B. in der US-A 2 510 777 und US-A 4 075 163 sowie US-A 3 954 847 beschrieben.

Aus der JP-A 61-73764 und der JP-A 63/105 057 sind Lichtstabilisatoren auf Basis von phosphorhaltigen Verbindungen für vollaromatische Polyamide bekannt.

Aufgrund ihrer mechanischen Eigenschaften sind Polyamide prinzipiell für die Herstellung von Flüssigkeits- oder Feststoffbehältern geeignet, doch sind bislang viele derartige Anwendungsmöglichkeiten an der fehlenden Transluzenz der Polyamide, d.h. der fehlenden Transparenz (Durchsichtigkeit) in direkten Kontakt mit Medien, gescheitert da z.B. bei Flüssigkeitsbehältern häufig die Forderung gestellt wird, den Füllstand von außen ablesen zu können.

Der vorliegenden Erfindung lag daher die Aufgabe zugrunde, Polyamid-Formmassen mit verbesserter Transluzenz zur verfügung zu stellen, ohne die mechanischen Eigenschaften zu beeinträchtigen.

Erfindungsgemäß wird diese Aufgabe durch Polyamid-Formmassen gelöst, bestehend aus

A) 80 bis 99,95 Gew.% eines thermoplastischen Polyamids, wobei aromatische Polyamide ausgeschlossen sind,

B) 0,05 bis 1,0 Gew.% einer Phosphorverbindung der Struktur

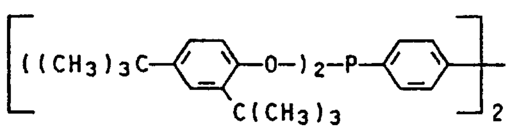

sowie darüber hinaus

C) 0 bis 19,95 Gew.% von B) verschiedener Zusatzstoffe und Verarbeitungshilfsmittel.

Überraschenderweise wurde gefunden, daß die Zugabe geringer Mengen der Phosphorverbindung die Transluzenz wesentlich verbessert.

Als Komponente A) enthalten die erfindungsgemäßen Polyamid-Formmassen 80 bis 99,95, vorzugsweise 90 bis 99,9 und insbesondere 98 bis 99,9 Gew.% eines thermoplastischen Polyamids, wobei aromatische Polyamide ausgeschlossen sind.

Geeignete Polyamide sind an sich bekannt und umfassen die halbkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten Dicarbonsäure mit 4 bis 12 Kohlenstoffatomen, mit einem Diamin, welches bis 14 Kohlenstoffatome aufweist, hergestellt werden, oder durch Kondensation von ω-Aminocarbonsäuren oder Polyaddition von Lactamen. Beispiele für

Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide, wie Polycaprolactam, Polylaurinsäurelactam, ferner Poly-11-aminoundecansäure und ein Polyamid aus Di(p-aminocyclohexyl)-methan- und Dodecandisäure. Es ist auch möglich, gemäß der Erfindung Polyamide zu verwenden, die durch Copolykondensation von zwei oder mehr der obengenannten Polymeren oder ihrer Komponenten hergestellt worden sind. Vorzugsweise sind die Polyamide linear und haben Schmelzpunkte von mehr als 200 °C.

Bevorzugte Polyamide sind Polyhexamethylenadipinsäureamid, Polyhexamethylensebacinsäureamid und Polycaprolactam. Die Polyamide weisen im allgemeinen eine relative Viskosität von 2,5 bis 5 auf, bestimmt an einer 1 %igen Lösung (1 g/100 ml) in 96 %iger Schwefelsäure bei 23 °C, was einem Molekulargewicht von etwa 15 000 bis 45 000 entspricht. Polyamide mit einer relativen Viskosität von 2,5 bis 3,5, insbesondere 2,6 bis 3,4 werden bevorzugt verwendet.

Der Anteil der Phosphorverbindung B) beträgt 0,05 bis 1, vorzugsweise 0,1 bis 0,8 und insbesondere 0,15 bis 0,6 Gew.%.

Die Verbindung B) hat die Struktur

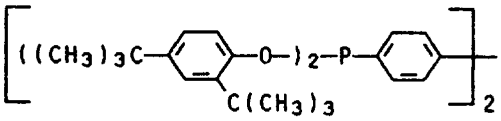

und ist unter der Bezeichnung Irgafos® P-EPQ (Ciba-Geigy) im Handel erhältlich.

Als Komponenten C) können die erfindungsgemäßen Polyamid-Formmassen 0 bis 19,95, vorzugsweise 0,1 bis 10 und insbesondere 0,1 bis 2 Gew.% an von B) verschiedenen Zusatzstoffen und Verarbeitungshilfsmitteln enthalten, solange die Transluzenz durch diese Zusätze nicht negativ beeinflußt wird.

Übliche Zusatzstoffe und Verarbeitungshilfsmittel sind z.B. Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- und pulverförmige Füll- und Verstärkungsmittel, Keimbildungsmittel und Weichmacher.

Die Stabilisatoren können den thermoplastischen Formmassen in jedem Stadium der Herstellung zugesetzt werden, werden jedoch vorzugsweise möglichst früh zugegeben, um zu verhindern, daß die Zersetzung bereits beginnt, bevor der Stabilisator eingearbeitet ist. Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.-%, bezogen auf das Gewicht der thermoplastischen Formmasse, genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Gleit- und Entformungsmittel werden in der Regel in Mengen von max. 1 Gew.-%, bezogen auf das Gesamtgewicht der Formmasse, zugesetzt. Beispiele hierfür sind Stearinsäure, Stearinalkohol und Stearinsäureamide.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel, Beispiele für letztere sind Kohlenstoffasern, Glasfasern, amorphe Kieselsäure, Asbest, Calciumsilicat, Aluminiumsilicat, Magnesiumcarbonat, Kaolin, Kreide, gepulverter Quarz, Glimmer und Feldspat.

Als Keimbildungsmittel können z.B. Talkum, Calciumfluorid, Natriumphenylphosphinat, Aluminiumoxid und feinteiliges Polytetrafluorethylen eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Die Herstellung der erfindungsgemäßen Formmassen kann nach an sich bekannten Verfahren erfolgen, z.B. durch Abmischen der Komponenten A) und B) und ggf. C) in der Schmelze bei erhöhten Temperaturen oder aber durch Mischen der Komponenten in Mischvorrichtungen. Zweckmäßigerweise verwendet man hierzu Extruder, z.B. Einschnecken- oder Zweischneckenextruder oder andere herkömmliche Plastifizierungsvorrichtungen, wie Brabender-Mühlen oder Banbury-Mühlen.

Die verbesserte Transluzenz der erfindungsgemäßen Polyamid-Formmassen wird durch den Zusatz der Phosphorverbindung B) erreicht, ohne daß dadurch z.B. die mechanischen Eigenschaften (Schlagzähigkeit, E-Modul) oder die Verarbeitungseigenschaften (Schmelzviskosität) beeinträchtigt werden. Hinsichtlich der Schädigungsarbeit ist teilweise sogar eine Verbesserung zu beobachten. Weiterhin vorteilhaft ist, daß die Transluzenz auch bei mehrmaliger Verarbeitung erhalten bleibt.

Die Sphärolithgröße scheint einen gewissen Einfluß auf die Transluzenz zu haben, da bei zu kleiner Sphärolithgröße (unterhalb etwa 3 µm) wie auch bei Sphärolithgrößen von mehr als 10 µm negative Auswirkungen beobachtet werden. Dementsprechend liegt die bevorzugte Sphärolithgröße im Bereich von 3 bis 10 µm.

Beispiele

Zur Herstellung von Polyamid-Formmassen wurden folgende Komponenten eingesetzt:

Komponente A:

Polyhexamethylenadipinamid mit einer rel. Viskosität von 2,6 (gemessen in 96 gew.%iger $H_2SO_4$ in einer Konzentration von 1 g/100 ml bei 25 °C) von 2,6 (Ultramid® A3 der BASF Aktiengesellschaft).

Komponente B:

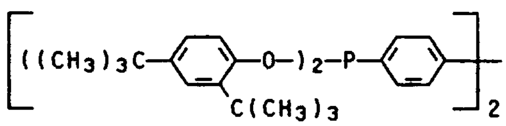

(Irgafos® P-EPQ der Fa. Ciba-Geigy AG)

Komponente B/$V_1$

Talkum

Komponente B/$V_2$

Natriumphenylphosphinat

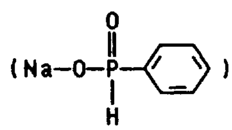

Komponente B/$V_3$

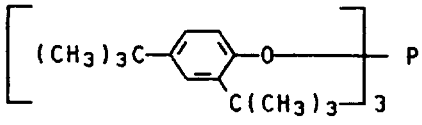

(Irgafos® 168 der Ciba-Geigy AG).

Zur Herstellung der jeweiligen Formmassen wurden die Komponenten A), B) und C) vermischt, in einem Extruder bei Massentemperaturen von 280 °C das Polyamid aufgeschmolzen und die Mischung anschließend extrudiert und granuliert. Aus dem Granulat wurden durch Spritzguß zur Beurteilung der Farbe und

Transluzenz Testplättchen der Abmessungen 60 x 40 mm und Dicken von 0,5 bis 2 mm, zur Bestimmung der Schädigungsarbeit die in der Ultramid®-Broschüre der BASF (1985, S, 14, Abb. 7) beschriebenen Testkästchen hergestellt.

Die Zusammensetzung der einzelnen Formmassen und die Ergebnisse der durchgeführten Messungen sind der nachfolgenden Tabelle zu entnehmen.

Dabei wurde die Schädigungsarbeit $W_{50}$ nach der in der Ultramid®-Broschüre der BASF Aktiengesellschaft (1985, Seite 14, Abb. 7) beschriebenen Verfahrensweise am Testkästchen bestimmt.

Weiterhin ist darauf hinzuweisen, daß alle in der Tabelle dargestellten Zusammensetzungen 0,1 Gew.%, bezogen auf das Gesamtgewicht, an Irganox® 1098

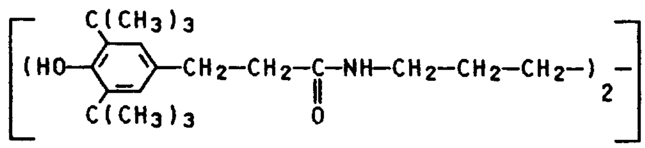

,

einem Oxidationsstabilisator der Firma Ciba-Geigy AG, enthielten.

Tabelle

| Beispiel Nr. | 1 | 2 | 3V | 4V | 5V | 6V |
|---|---|---|---|---|---|---|
| Komponente A (Gew.%) | 99,7 | 99,7 | 99,7 | 99,7 | 99,7 | 99,9 |
| Irganox® 1098 | 0,1 | 0,1 | 0,1 | 0,1 | 0,1 | 0,1 |
| Komponente B (Gew.%) | 0,2 B | 0,1 B<br>0,1 B/$V_2$ | 0,2 B/$V_1$ | 0,2 B/$V_2$ | 0,2 B/$V_3$ | - |
| Transluzenz | gut | gut | schlecht | schlecht | schlecht | schlecht |
| Farbe | weiß opak | weiß opak | elfenbein opak | elfenbein opak | elfenbein opak | elfen-bein opak |
| Sphärolithgröße | 3-10 | 3-10 | < 3 | > 10-30 | - | > 10-30 |
| Schädigungsarbeit $W_{50}$ [Nm] 23°C | > 140 | 80 | 38 | 59 | 69 | 125 |
| -20°C | 40 | - | 18 | - | - | 30 |

Die vorstehenden Ergebnisse belegen eindrucksvoll, daß die erfindungsgemäßen Polyamid-Formmassen bei deutlich verbesserter Transluzenz z.T. noch bessere mechanische Eigenschaften aufweisen als Produkte nach dem Stand der Technik.

## Patentansprüche

**1.** Polyamid-Formmassen mit verbesserter Transluzenz, bestehend aus

A) 80 bis 99,95 Gew.% eines thermoplastischen Polyamids, wobei aromatische Polyamide ausgeschlossen sind,

B) 0,05 bis 1,0 Gew.% einer Phosphorverbindung der Struktur

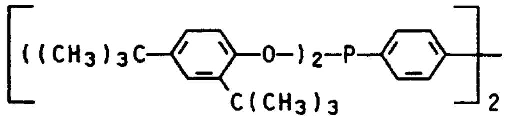

sowie darüber hinaus

C) 0 bis 19,95 Gew.% von B) verschiedener Zusatzstoffe und Verarbeitungshilfsmittel.

**2.** Verwendung der Polyamid-Formmassen gemäß Anspruch 1 zur Herstellung von Fasern, Folien und Formkörpern.

**3.** Formkörper hergestellt aus Polyamid-Formmassen gemäß Anspruch 1.

**4.** Flüssigkeitsbehälter aus Polyamid-Formmassen gemäß Anspruch 1.

**5.** Verwendung der Phosphorverbindung der Struktur

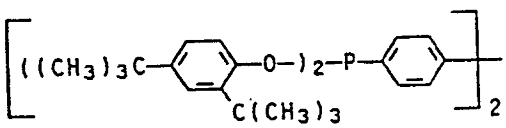

zur Verbesserung der Transluzenz von Polyamid-Formmassen gemäß Anspruch 1.

**Claims**

**1.** A polyamide molding composition of improved translucency, comprising

A) from 80 to 99.95% by weight of a thermoplastic polyamide provided that aromatic polyamides shall be excluded, and

B) from 0.05 to 1.0% by weight of a phosphorus compound of the structure

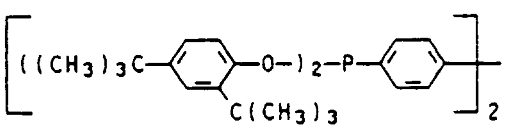

and in addition

C) from 0 to 19.95% by weight of non-B) additives and processing aids.

**2.** The use of a polyamide molding composition as claimed in claim 1 for producing fibers, films and moldings.

**3.** A molding produced from a polyamide molding composition as claimed in claim 1.

**4.** A liquid container produced from a polyamide molding composition as claimed in claim 1.

**5.** The use of a phosphorus compound of the structure

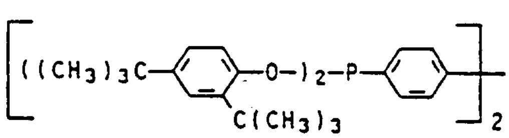

for improving the translucency of polyamide molding compositions as claimed in claim 1.

**Revendications**

1. Masses à mouler à base de polyamide ayant une translucidité améliorée, composées de
   A) 80 à 99,95% en poids d'un polyamide thermoplastique, les polyamides aromatiques étant exclus,
   B) 0,05 à 1,0% en poids d'un composé phosphoré de structure

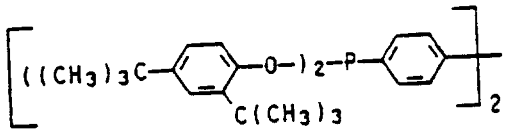

   et en outre de
   C) 0 à 19,95% en poids d'additifs différents de B) et de produits auxiliaires de mise en oeuvre.

2. Utilisation des masses à mouler à base de polyamide selon la revendication 1 pour la fabrication de fibres, de feuilles et de corps moulés.

3. Corps moulés, fabriqués à partir de masses à mouler à base de polyamide selon la revendication 1.

4. Récipients pour liquides, obtenus à partir de masses à mouler à base de polyamide selon la revendication 1.

5. Utilisation du composé phosphoré de structure

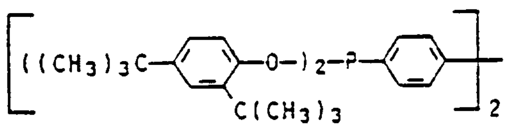

pour améliorer la translucidité de masses à mouler à base de polyamide selon la revendication 1.